# EUROPEAN PATENT APPLICATION

(11) **EP 4 535 769 A1**
(43) Date of publication of application: **09.04.2025**
(21) Application number: 22943147.3
(22) Date of filing: 26.05.2022
(51) Int. Cl.: H04M 1/725, G06F 3/0481

(54) **INTERFACE DISPLAY METHOD AND APPARATUS AND STORAGE MEDIUM**

(71) Applicant: Beijing Xiaomi Mobile Software Co., Ltd., Beijing 100085 (CN)
(72) Inventor: SHI, Cheng, Beijing 100085 (CN); TANG, Cheng, Beijing 100085 (CN)
(74) Representative: Stöckeler, Ferdinand
(86) International application number: PCT/CN2022/095254
(87) International publication number: WO 2023/225947

(57) **Abstract**

The present disclosure relates to the field of mobile internet. Provided are an interface display method and apparatus and a storage medium, which are used for directly opening a target interface corresponding to target information without jumping. The method is applied to a terminal on which a first application runs, and comprises: when target information is displayed on a display interface of a first application, receiving an operation on the target information; and in response to the operation, displaying a target interface corresponding to the target information on a target display interface, the target display interface being different from the display interface of the first application and being displayed at the same time as the display interface of the first application.

## Description

### FIELD

The present invention relates to the technical field of terminals, in particular to an interface display method, an interface display apparatus, and a storage medium.

### BACKGROUND

At present, users often encounter a variety of links and files when using various application programs (APPs). When users need to open an interface corresponding to a link through the link, there are generally two ways, one of which is to click on the link so that the APP jumps to a browser to open the interface corresponding to the link, and the other of which is to copy the link, exit the APP currently in use, and open the interface corresponding to the link through a browser or an APP corresponding to the link. No matter which way is used, an original APP interface will be covered when opening the interface corresponding to the link, which causes a lot of inconvenience to users.

### SUMMARY

In order to overcome the problems existing in the related art, the present invention provides an interface display method, an interface display apparatus, and a storage medium.

According to a first aspect of embodiments of the present invention, there is provided an interface display method applied to a terminal, a first application running on the terminal. The interface display method includes: receiving an operation on target information in case that the target information is displayed on a display interface of the first application; and displaying a target interface corresponding to the target information on a target display interface in response to the operation. The target display interface is different from the display interface of the first application and is displayed simultaneously with the display interface of the first application.

In an embodiment, displaying the target interface corresponding to the target information on the target display interface in response to the operation includes: triggering the terminal to enter a split screen mode or a small window mode in response to the operation; and displaying the target display interface in the split screen mode or the small window mode and displaying the target interface corresponding to the target information on the target display interface.

In another embodiment, displaying the target display interface in the split screen mode or the small window mode and displaying the target interface corresponding to the target information on the target display interface includes: when an application corresponding to the target information is a second application and the second application corresponding to the target information is installed on the terminal, and the second application supports running in the split screen mode or the small window mode, controlling the second application to run in the split screen mode or the small window mode; and taking a display interface of the second application running in the split screen mode or the small window mode as the target display interface, and displaying the target interface corresponding to the target information on the target display interface.

In yet another embodiment, displaying the target interface corresponding to the target information on the target display interface in response to the operation includes: in response to the operation, when determining that an application corresponding to the target information is a second application, controlling running of the second application in a target area according to the target information and taking the display interface of the second application as the target display interface; and displaying the target interface corresponding to the target information in the target display interface.

In yet another embodiment, controlling running of the second application in the target area according to the target information includes: determining that the second application corresponding to the target information is installed on the terminal; and controlling the second application to run in a split screen mode or a small window mode in the target area.

In yet another embodiment, the operation includes at least one of: a dragging operation of dragging the target information from the display interface of the first application to a preset area; a pressing operation on the target information; or a clicking operation on the target information.

In yet another embodiment, the interface display method further includes: displaying a thumbnail shadow of the target information in a process of dragging the target information from the display interface of the first application to the preset area, in response to the operation on the target information being the dragging operation of dragging the target information from the display interface of the first application to the preset area.

In yet another embodiment, the response to the operation includes: creating a masking area when the thumbnail shadow moves into the preset area; and responding to the operation on the target information, in case that a termination operation of the dragging operation is detected in the masking area.

In yet another embodiment, the target information includes at least one of a network link or a file.

According to a second aspect of embodiments of the present invention, there is provided an interface display apparatus, applied to a terminal, a first application running on the terminal. The interface display apparatus includes: a receiving module, configured to receive an operation on target information in case that the target information is displayed on a display interface of the first application; and a display module, configured to display a target interface corresponding to the target information on a target display interface in response to the operation. The target display interface is different from the display interface of the first application and is displayed simultaneously with the display interface of the first application.

In an embodiment, the display module is used for the display module and is specifically configured to: trigger the terminal to enter a split screen mode or a small window mode in response to the operation; and display the target display interface in the split screen mode or the small window mode and display the target interface corresponding to the target information on the target display interface.

In another embodiment, the display module is configured to: when an application corresponding to the target information is a second application and the second application corresponding to the target information is installed on the terminal, and the second application supports running in the split screen mode or the small window mode, control the second application to run in the split screen mode or the small window mode; and take a display interface of the second application running in the split screen mode or the small window mode as the target display interface, and display the target interface corresponding to the target information on the target display interface.

In yet another embodiment, the display module is further configured to: in response to the operation, when an application corresponding to the target information is determined as a second application, control running of the second application in a target area according to the target information and take the display interface of the second application as the target display interface; and display the target interface corresponding to the target information in the target display interface.

In yet another embodiment, the display module is further configured to: determine that the second application corresponding to the target information is installed on the terminal; and control the second application to run in a split screen mode or a small window mode in the target area.

In yet another embodiment, the operation includes at least one of: a dragging operation of dragging the target information from the display interface of the first application to a preset area; a pressing operation on the target information; or a clicking operation on the target information.

In yet another embodiment, the display module is further configured to: display a thumbnail shadow of the target information in a process of dragging the target information from the display interface of the first application to the preset area, in response to the operation on the target information being the dragging operation of dragging the target information from the display interface of the first application to the preset area.

In yet another embodiment, the display module is configured to: create a masking area when the thumbnail shadow moves into the preset area; and respond to the operation on the target information, in case that a termination operation of the dragging operation is detected in the masking area.

In yet another embodiment, the target information includes at least one of a network link or a file.

According to a third aspect of embodiments of the present invention, there is provided an interface display apparatus, including: a processor; and a memory storing instructions executable by the processor. The processor is configured to perform the interface display method as described in the first aspect and any one of its embodiments.

According to a third aspect of embodiments of the present invention, there is provided a non-transitory computer-readable storage medium, and when executed by a processor, instructions in the storage medium perform the interface display method described in the first aspect and any one of its embodiments.

The technical solutions according to embodiments of the present invention include the following beneficial effects. When the target information is displayed on the display interface of the first application, users can directly open the target interface corresponding to the target information on the target display interface by the operation on the target information, without need to jump from the display interface of the first application. Moreover, since the target display interface and the display interface of the first application are displayed at the same time, the target display interface will not cover the display interface of the first application, improving user experience.

It is to be understood that both the foregoing general description and the following detailed description are merely illustrative and explanatory and are not restrictive of the present invention.

### BRIEF DESCRIPTION OF DRAWINGS

The accompanying drawings, which are incorporated into and constitute a part of this specification, illustrate embodiments consistent with the present invention and, together with the description, serve to explain the principles of the present invention.
Fig. 1 is a flowchart of an interface display method according to an exemplary embodiment.
Fig. 2 is an interface diagram of a terminal device according to an exemplary embodiment.
Fig. 3 is a flowchart of another interface display method according to an exemplary embodiment.
Fig. 4 is a flowchart of another interface display method according to an exemplary embodiment.
Fig. 5 is a flowchart of another interface display method according to an exemplary embodiment.
Fig. 6 is an interface diagram of a first application according to an exemplary embodiment.
Fig. 7 is a flowchart of another interface display method according to an exemplary embodiment.
Fig. 8 is an interface diagram of a terminal device according to an exemplary embodiment.
Fig. 9 is an interface diagram of another terminal device according to an exemplary embodiment.
Fig. 10 is a flowchart of another interface display method according to an exemplary embodiment.
Fig. 11 is a block diagram of an interface display apparatus according to an exemplary embodiment.
Fig. 12 is a block diagram of an apparatus according to an exemplary embodiment (a general structure of a mobile terminal).
Fig. 13 is a block diagram of an apparatus according to an exemplary embodiment (a general structure of a server).

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all possible implementations consistent with the present invention.

As described in the background section, in the related art, to open a link displayed in a current application, the link can only be opened by webpage redirection, which brings a lot of inconvenience to users.

Directed at the above technical problems, embodiments of the present invention provide an interface display method. When target information is displayed on a display interface of a first application, users can directly open a target interface corresponding to the target information on a target display interface by an operation on the target information, without need to jump from the display interface of the first application. Moreover, since the target display interface and the display interface of the first application are displayed at the same time, the target display interface will not cover the display interface of the first application, improving user experience.

The interface display method according to embodiments of the present invention is mainly applied to terminals, such as mobile phones, tablet computers, desktop computers, laptops, handheld computers, notebook computers, ultra-mobile personal computer (UMPC), netbooks and other terminals devices, which can interact with users by inputting devices such as keyboards, virtual keyboards, touchpads, touch screens, voice-activated devices and the like.

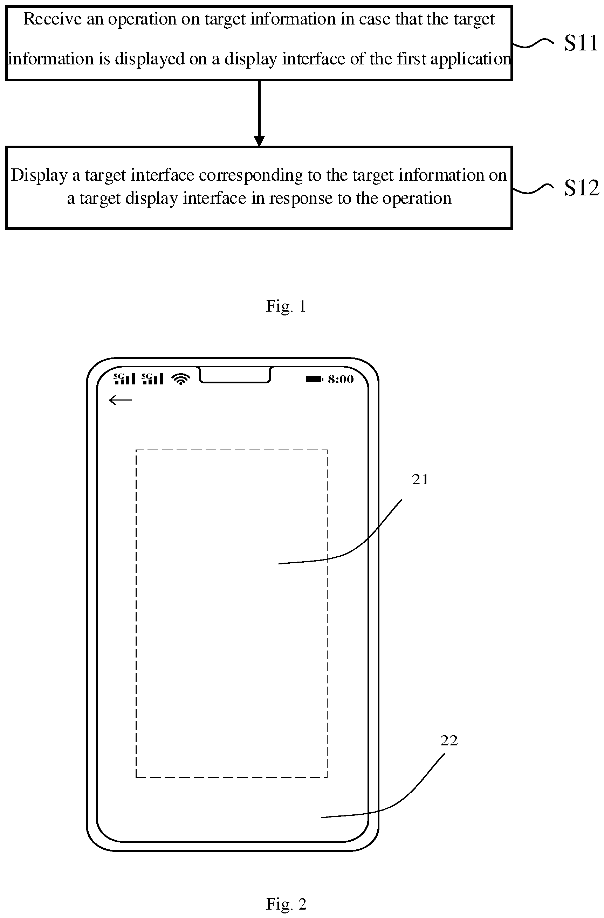

Fig. 1 is a flowchart of an interface display method according to an exemplary embodiment. As shown in Fig. 1, the interface display method includes the following steps.

In step S11, an operation on target information is received in case that the target information is displayed on a display interface of the first application.

In embodiments of the present invention, the first application runs on the terminal, and the first application may be any application having target information, such as instant messaging applications, short message service, browsers, etc.

Optionally, the target information may be a network link, a file and in other information forms for opening an interface different from the current display interface of the first application. Unless otherwise specified, the term "link" or "network link" herein refers not only to website pages or network links displayed in browsers, but also to various pages opened in applications, and is not limited thereto. Any content that can be displayed on an interface of an application and contains text, images, hyperlinks or multimedia can be called a "webpage", and the corresponding link can be called a "webpage link" or a "network link".

In step S12, a target interface corresponding to the target information is displayed on a target display interface in response to the operation.

The target display interface is different from the display interface of the first application and is displayed simultaneously with the display interface of the first application.

In embodiments of the present invention, when the target information is displayed on the display interface of the first application, users can directly open the target interface corresponding to the target information on the target display interface by the operation on the target information, without need to jump from the display interface of the first application. Moreover, since the target display interface and the display interface of the first application are displayed at the same time, the target display interface will not cover the display interface of the first application, improving user experience.

In some embodiments, the operation on the target information includes at least one of: a dragging operation of dragging the target information from the display interface of the first application to a preset area; a pressing operation on the target information; or a clicking operation on the target information.

The click operation may be a single click operation or a double click operation. When the operation on the target information is the dragging operation of dragging the target information from the display interface of the first application to the preset area, it can be judged whether the user's operation is the dragging operation according to a preset dragging rule.

Optionally, the dragging rule may be whether a dragging distance is greater than a preset distance, and/or whether a dragging time is greater than a preset time. When the dragging distance is greater than the preset distance and/or the dragging time is greater than the preset time, it is determined that the user's operation is the dragging operation.

Optionally, the preset area includes multiple areas, and the terminal performs different operations when dragging the target information to different preset areas.

For example, the preset area includes a first preset area and a second preset area. As shown in Fig. 2, the first preset area 21 is an edge area of the terminal device interface, and the second preset area 22 is a center area of the terminal device interface. Further, the first preset area includes an upper edge area, a lower edge area, a left edge area and a right edge area.

Optionally, the user needs to select the target information before dragging the target information.

It should be understood that in order to distinguish the selected target information from other information in the display interface of the first application, the color of the selected target information is different from that of other information.

Optionally, the application corresponding to the target information may be the first application or a second application different from the first application. When the application corresponding to the target information is the first application, the first application cannot be opened again, so it is only necessary to display the target interface corresponding to the target information; When the application corresponding to the target information is the second application, it can be judged whether it is necessary to open the second application by identifying whether the second application is installed in the terminal, and the target interface corresponding to the target information is displayed in the display interface of the second application.

It should be understood that in the process of responding to the operation on the target information, it can be judged whether there is a second application corresponding to the target information, that is, whether it is necessary to operate the second application to display the target interface corresponding to the target information. If it is determined that the second application needs running to display the target interface corresponding to the target information, the application corresponding to the target information is determined to be the second application; If it is determined that there is no need to operate the second application to display the target interface corresponding to the target information, the target interface corresponding to the target information can be displayed through the currently operating first application, and the application corresponding to the target information is determined as the first application.

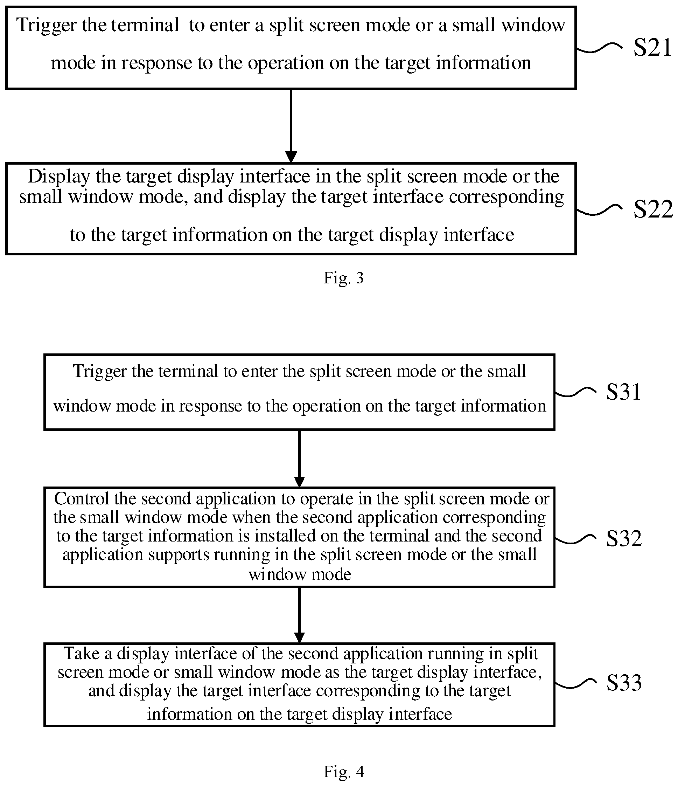

In some embodiments, as shown in Fig. 3, when the application corresponding to the target information is the first application, the target interface corresponding to the target information is displayed on the target display interface through steps S21-S22.

In step S21, the terminal is triggered to enter a split screen mode or a small window mode in response to the operation on the target information.

As a first possible implementation, when the operation on the target information is a dragging operation of dragging the target information from the display interface of the first application to the preset area, if the user drags the target information from the display interface of the first application to a first target area, the terminal is triggered to enter the split screen mode. If the user drags the target information from the display interface of the first application to a second target area, the terminal is triggered to enter the small window mode.

More specifically, when the target information is dragged from the display interface of the first application to the upper and lower edge areas of the first target area, the terminal is triggered to enter an up-down split screen mode; When the target information is dragged from the display interface of the first application to the left and right edge areas of the first target area, the terminal is triggered to enter a left-right split screen mode.

As a second possible implementation, when the operation on the target information is a pressing operation or a clicking operation, the terminal is triggered to enter a default split screen mode or a default small window mode.

As a third possible implementation, when the operation on the target information is a dragging operation to drag the target information from the display interface of the first application to a preset area, the terminal is triggered to enter a default display mode, which can be a split screen mode or a small window mode.

As a fourth possible implementation, when the operation on the target information is a dragging operation, the terminal is triggered to enter the default display mode, which can be a split screen mode or a small window mode.

In step S22, the target display interface is displayed in the split screen mode or the small window mode and the target interface corresponding to the target information is displayed on the target display interface.

For example, when the target information is dragged from the display interface of the first application to the upper edge area of the first target area, the terminal enters an up-down split screen mode, and the display interface of the first application is located in the upper split screen, and the lower split screen interface is taken as the target display interface, and the target interface corresponding to the target information is displayed in the target display interface. If the target display interface is displayed in the small window mode, and the display interface of the first application is displayed in full screen.

In embodiments of the present invention, when the application corresponding to the target information is the first application, the terminal is triggered to enter the split screen mode or the small window mode, and the target interface corresponding to the target information is displayed on the split screen interface or the small window interface without covering the display interface of the first application, so that the user can browse the display interface of the first application and the target interface of the target information at the same time without jumping to view the target interface, which brings great convenience to the user.

In other embodiments, when the application corresponding to the target application is the second application, as a possible implementation, as shown in Fig. 4, the target interface corresponding to the target information is displayed on the target display interface through steps S31-S33.

In step S31, the terminal is triggered to enter a split screen mode or a small window mode in response to the operation on the target information.

It is worth noting that the specific implementation process of step S31 is the same as that of step S21 described above and will not be described in detail here.

The difference is that after triggering the terminal to enter the split screen mode or the small window mode, embodiments of the present invention will identify whether the application corresponding to the target information is a second application, and judge whether the second application is installed on the terminal. When the second application is installed on the terminal, step S32 is executed. Alternatively, when the second application is installed on the terminal, the terminal interface will be triggered to display a selection interface, and the selection interface is used to indicate whether the user opens the second application. When receiving the user's operation of selecting to open the second application, step S32 is executed.

In step S32, when an application corresponding to the target information is a second application and the second application supports running in the split screen mode or the small window mode, the second application is controlled to run in the split screen mode or the small window mode.

In step S33, a display interface of the second application running in the split screen mode or the small window mode is taken as the target display interface, and the target interface corresponding to the target information is displayed on the target display interface.

Optionally, when the second application corresponding to the target information is not installed on the terminal, the target interface corresponding to the target information can be opened through the browser, and the browser can be controlled to operate in the split screen mode or the small window mode.

In embodiments of the present invention, after the terminal enters the split screen mode or the small window mode, it is judged whether the second application needs to be started. When the second application needs to be started and is installed on the terminal, the second application is controlled to operate in the split screen mode or the small window mode, and the interface corresponding to the target information is displayed on the display interface of the second application, so that the user can directly open the second application without jumping to another interface, and the second application will not cover the display interface of the first application, so that the user can simultaneously view the display interface of the first application and the target interface of the target information of the second application.

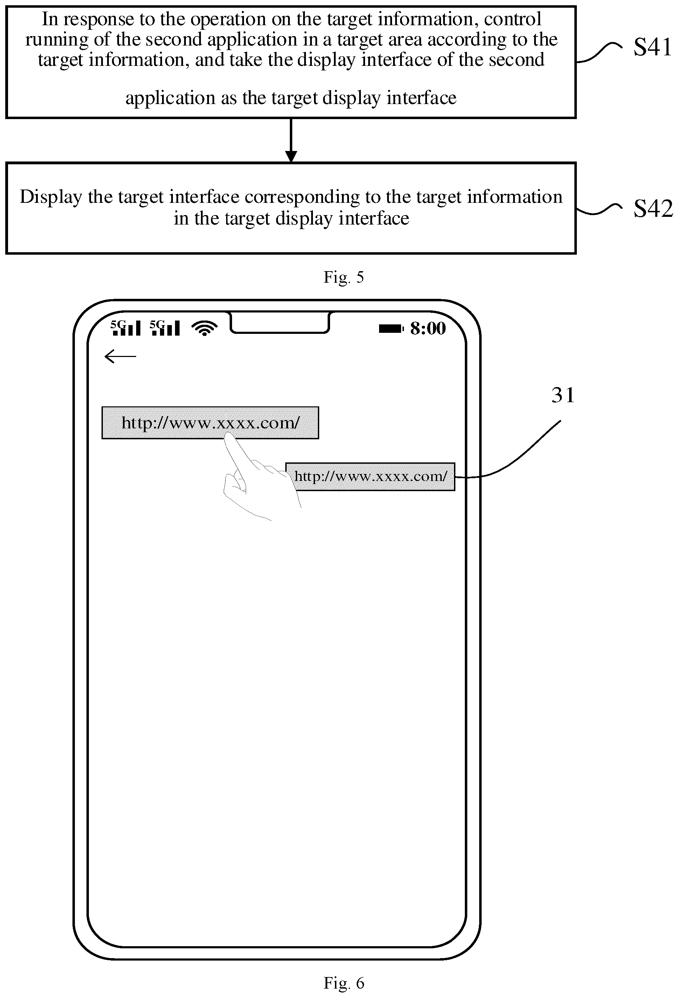

In other embodiments, when the application corresponding to the target application is the second application, as a second possible implementation, as shown in Fig. 5, the target interface corresponding to the target information is displayed on the target display interface through steps S41-S42.

In step S41, in response to the operation, running of the second application in a target area is controlled according to the target information and the display interface of the second application is taken as the target display interface.

Optionally, in response to the operation on the target information, it is determined whether the application corresponding to the target information is a second application; and in case that the application corresponding to the target information is the second application, when it is determined that the second application corresponding to the target information is installed on the terminal, the second application is controlled to operate in the target area in the split screen mode or the small window mode.

Optionally, when the second application corresponding to the target information is not installed on the terminal, the target interface corresponding to the target information can be opened through the browser, and the display interface of the browser is taken as the target display interface.

In step S42, the target interface corresponding to the target information is displayed in the target display interface.

In embodiments of the present invention, in response to the operation on the target information, the application corresponding to the target information is identified, and when the application corresponding to the target application is the second application and the second application is installed on the terminal, the terminal is controlled to enter in the split-screen mode or the small-window mode, so that the second application can run in the target area in the split-screen mode or the small-window mode, so that the user can directly open the second application without jumping to another display interface, and the second application will not cover the display interface of the first application, so that the user can simultaneously view the display interface of the first application and the target interface of the target information of the second application.

In some embodiments, as shown in Fig. 6, in the process of dragging the target information from the display interface of the first application to the preset area, a thumbnail shadow 31 of the target information is displayed.

The content in the thumbnail shadow of the target information is the same as that of the target information, or the title of the target information is displayed in the thumbnail shadow of the target information.

It should be understood that the thumbnail shadow of the target information moves with the trajectory of the user's dragging operation during the user's dragging operation.

In embodiments of the present invention, the thumbnail shadow of the target information is displayed in the process of dragging the target information from the display interface of the first application to the preset area, so that the user can know the moving position of the target information more accurately.

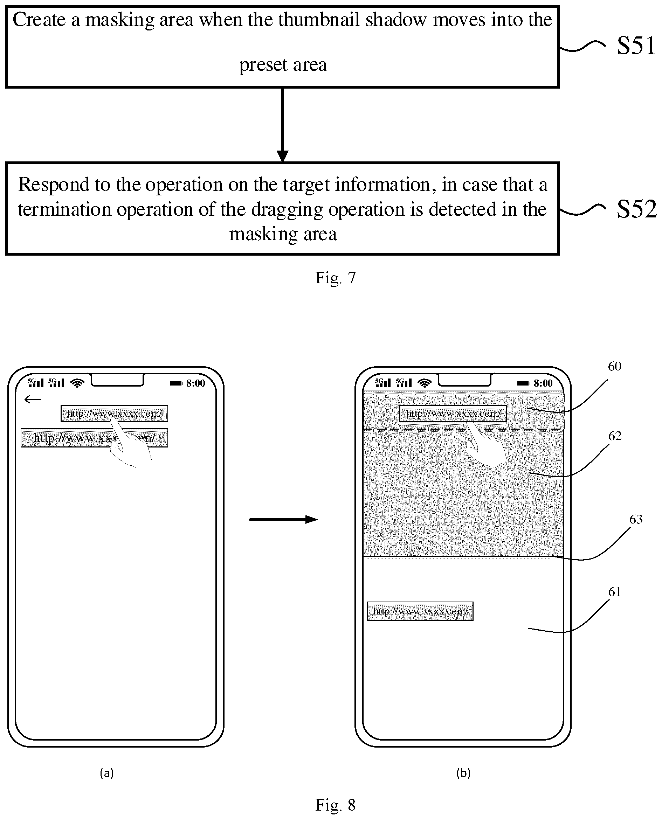

In the following, it will be described that how to be triggered in response to the operation on the target information when the operation on the target information is the dragging operation of dragging the target information from the display interface of the first application to a preset area, as shown in Fig. 7, including steps S51-S52.

In step S51, when the thumbnail shadow moves into the preset area, a masking area is created.

The masking area can be a window with lower transparency, for example, some pixels in the window are transparent and some pixels are black. Optionally, the masking area can be created on the desktop of the terminal and displayed separately from the display interface of the first application, or independently created on the display interface of the first application, and the area of the masking area is smaller than that of the display interface of the first application.

For example, as shown from (a) in Fig. 8, when the thumbnail shadow is dragged into the upper edge area 60 of the first preset area, in response to the dragging operation, as shown from (b) in in Fig. 8, the display interface 61 of the first application is reduced to half of the terminal interface, and the area of the masking area 62 is the other half of the terminal interface, and there is a split screen mark 63 between the display interface of the first application and the masking area.

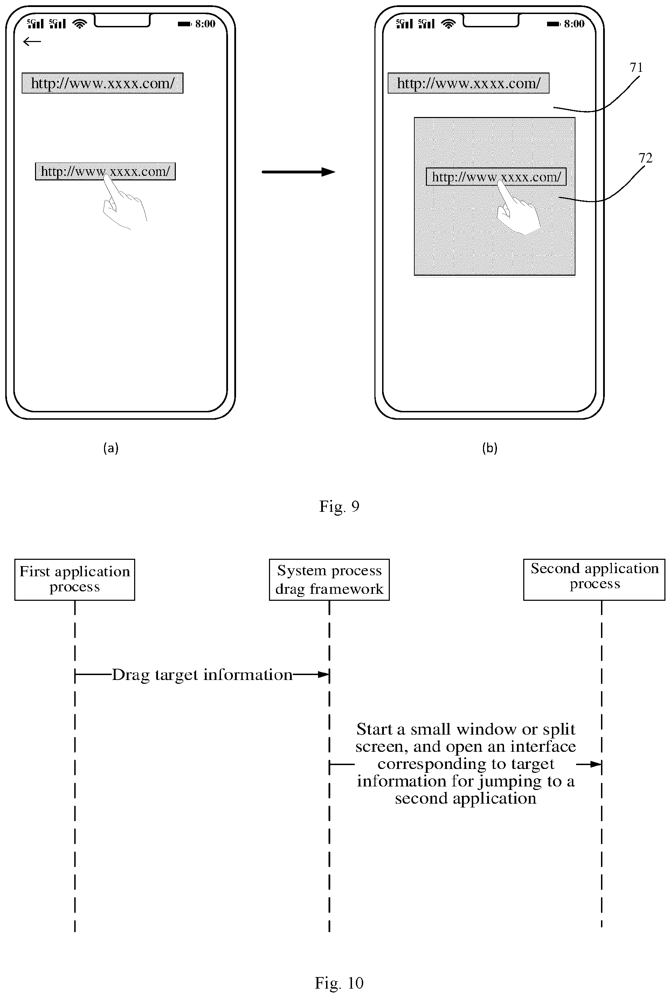

As another example, as shown from (a) in Fig. 9, when the thumbnail shadow is dragged into the second preset area, in response to the dragging operation, as shown from (b) in Fig. 9, the area of the display interface 71 of the first application remains unchanged, and a masking area 72 with an area smaller than that of the display interface of the first application is created on the display interface 71 of the first application.

It should be pointed out that when creating the masking area, the thumbnail shadow is still dragged and not released. In addition, in the process of dragging the thumbnail shadow, the masking area will also change accordingly when moving from the first preset area to the second preset area.

In step S52, the operation on the target information is responded, in case that a termination operation of the dragging operation is detected in the masking area.

The termination operation of the dragging operation is the operation that the user stops dragging the target information. Specifically, when it is detected that the user stops dragging the target information for more than a preset time in the masking area, the operation on the target information is responded.

Optionally, the starting position of the target interface of the target information is determined according to the current mode of the terminal device.

For example, when the current mode of the terminal device is the left-right split screen mode and the display interface of the first application is located in the left split screen, the starting position of the target interface of the target information is at the right split screen of the terminal interface. For another example, when the current mode of the terminal device is the up-down split screen mode and the display interface of the first application is located in the upper split screen, the starting position of the target interface of the target information is located in the lower split screen of the terminal interface. For another example, when the current mode of the terminal device is the small window mode, the starting position of the target interface of the target information is located in the small window in the display interface of the first application.

After the target interface of the target information runs on the terminal device, the user can adjust the size of the target interface of the target information according to actual needs.

According to embodiments of the present invention, the user can clearly know the operating position of the target interface of the target information by creating the masking area.

The process of how to identify the second application corresponding to the target information and whether the second application is installed on the terminal is described in detail below.

As a possible implementation, when the target information is a network link, an identification information of the application program matched with the network link is found in the target database according to the website address corresponding to the network link, and the application program characterized by the found identification information is opened according to the found identification information of the application program. The target database may include identification information of the application program and domain name information corresponding to the application program.

For example, when the network link is "http://www.xxxx.com/", by searching the target database, the identification information of the matching application of this network link is "xxxx", therefore the terminal can determine that the application program matching with the network link is "xxxx".

As another possible implementation, when the target information is a file, the format of the file is first recognized, and the matching target application is determined to be a file reader based on the file format. For example, when the file format is a "Word file", the second application can be a Word reader; and when the file format is a "PDF file", the second application can make a PDF reader.

In actual use, after identifying the second application corresponding to the target information, the terminal device can traverse its own installed applications to detect whether the installed applications include the second application.

Specifically, in the operating system of the terminal device, the locally installed applications are usually recorded through an "installed application list". Therefore, in embodiments of the present invention, the terminal device can obtain the installed application list in its operating system, and then traverse the installed application list to detect whether the installed application contains the second application.

For example, if the second application is A, when a third application in the installed application list traversed by the terminal device is the same as the second application, it means that the terminal device has installed the second application A locally.

Optionally, when it is determined that the installed application includes the second application, the terminal device can start the second application and send the acquired target information to the second application, so that the second application can open an application page corresponding to the target information.

In another implementation scenario of the present invention, when it is detected that the installed application does not include the second application, embodiments of the present invention can also start the local browser to display the page corresponding to the target information through the browser, so that the user can continue browsing the corresponding page content.

Optionally, embodiments of the present invention can start the browser in two ways, that is, starting the system browser of the terminal device or starting the browser with the highest priority in the terminal device.

Further, when the webpage application page corresponding to the target information is opened through the browser, embodiments of the present invention can also display the corresponding application icon, application name and other information in the webpage application page, so that the user can download the application by clicking the displayed application icon when viewing the webpage application page. In order not to affect the user's normal viewing of webpage application content, when displaying information such as application icon and application name in the webpage application page, embodiments of the present invention can display the information such as application icon and application name at the top of the page, or display it in the form of a floating window, etc.

By identifying the second application corresponding to the target application and whether the second application is installed in the terminal, when the second application is installed in the terminal, embodiments of the present invention control the second application to run in a split screen mode or a small window mode. When the second application is not installed in the terminal, the browser is controlled to open the target interface corresponding to the target information and operate in the split screen mode or the small window mode, avoiding that the user need to open the second application by jumping to the interface, and at the same time, the current display interface of the first application will not be covered.

In the following, an interface display method provided by an embodiment of the present invention will be described from the aspect of system process. As shown in Fig. 10, when a first application is operating on a terminal, there is a first application process in the system. When it is detected that a user drags the target information in the display interface of the first application, the dragged target information is monitored and identified by instrumentation, and is passed to a dragging frame of the system process. A surface is created in the drag frame to drag the shadow (that is, the thumbnail in the above embodiments), and the user's drag event on the target information in real time is monitored. There are multiple preset areas in the interface of the terminal device. When the drag shadow enters the preset areas which is preset, the system process creates a masking area to prompt the user to enter the split screen or small window mode soon. When it is monitored that the user releases his/her hand in the masking area, the system process sends a message to make the terminal enter in the split screen or small window mode, and transmits the target information to the system process. The system process judges the application to be started according to the content of the target information, and then starts the application corresponding to the target information after entering in the split screen or small window mode.

Instrumentation means that on the basis of ensuring the logical integrity of the original program, a probe is inserted into the program, and information (method itself, method parameter value, return value, etc.) is collected in the code through the probe and a code segment is inserted at a specific position, so as to collect the dynamic context information when the program is running. The operating and change of the process in the system can be monitored in real time by instrumentation. In embodiments of the present invention, the target information is monitored by instrumentation to open the application corresponding to the target information.

According to the interface display method according to embodiments of the present invention, when the target information is displayed on the display interface of the first application, by operating the target information, the user can directly open the target interface corresponding to the target information on the target display interface, without jumping from the display interface of the first application, and because the target display interface and the display interface of the first application are displayed at the same time, the target display interface will not cover the display interface of the first application, thus improving the user experience.

It should be noted that those skilled in the art can understand that the above-mentioned various implementations/embodiments of embodiments of the present invention can be used together with the above-mentioned embodiments or independently. Whether used alone or in combination with the aforementioned embodiments, the implementation principle is similar. In the implementation of the present invention, some embodiments are described as embodiments used together. Of course, those skilled in the art can understand that such illustration is not a limitation of the disclosed embodiments.

Based on the same concept, embodiments of the present invention also provide an interface display apparatus.

It can be understood that in order to realize the above functions, the interface display apparatus according to embodiments of the present invention includes corresponding hardware structures and/or software modules to perform various functions. In combination with units and algorithm steps of examples disclosed in the embodiments of the present invention, the embodiments of the present invention can be realized in the form of hardware or the combination of hardware and computer software. Whether a function is implemented in the way of hardware or computer software driving hardware depends on specific applications and design constraints of technical solutions. Those skilled in the art can use different methods to implement the described functions for each specific application, and such implementation should not be considered beyond the scope of the technical solutions of the embodiments of the present invention.

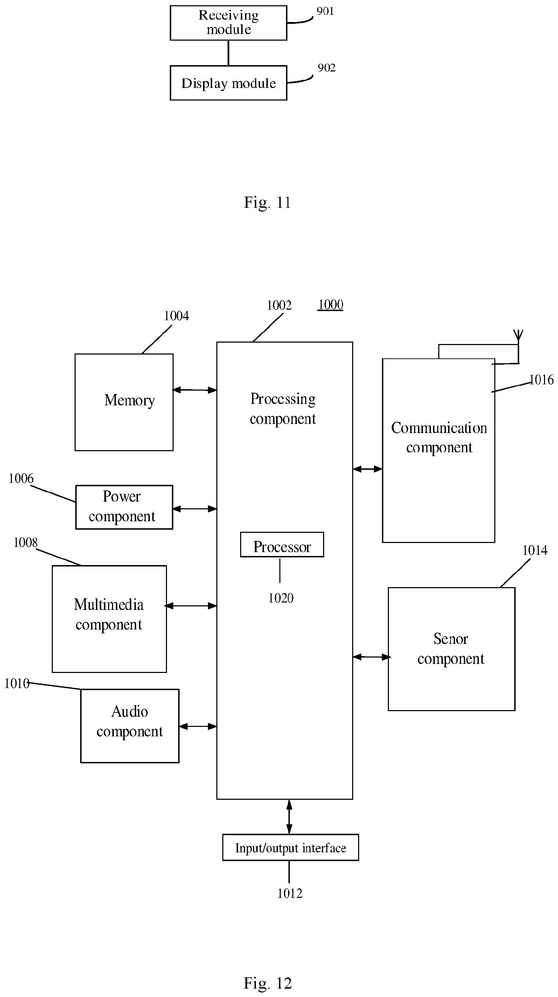

Fig. 11 is a block diagram of an interface display apparatus according to an exemplary embodiment. Referring to Fig. 11, the interface display apparatus is applied to a terminal, a first application running on the terminal. The interface display apparatus includes a receiving module 901 and a display module 902.

The receiving module 901 is configured to receive an operation on target information in case that the target information is displayed on a display interface of the first application, in which the target information is configured to display a target interface corresponding to the target information in a second application.

The display module 902 is configured to display a target interface corresponding to the target information on a target display interface in response to the operation, in which the target display interface is different from the display interface of the first application and is displayed simultaneously with the display interface of the first application.

In an embodiment, the display module 902 is specifically configured to: trigger the terminal to enter a split screen mode or a small window mode in response to the operation; and display the target display interface in the split screen mode or the small window mode and display the target interface corresponding to the target information on the target display interface.

In another embodiment, the display module 902 is specifically configured to: control the second application to run in the split screen mode or the small window mode, when an application corresponding to the target information is a second application and the second application corresponding to the target information is installed on the terminal and supports running in the split screen mode or the small window mode; and take a display interface of the second application running in the split screen mode or the small window mode as the target display interface, and display the target interface corresponding to the target information on the target display interface.

In another embodiment, the display module 902 is specifically configured to: in response to the operation, when an application corresponding to the target information is determined as a second application, control running of the second application in a target area according to the target information and take the display interface of the second application as the target display interface; and display the target interface corresponding to the target information in the target display interface.

In another embodiment, the display module 902 is specifically configured to: determine that the second application corresponding to the target information is installed on the terminal; and control the second application to run in a split screen mode or a small window mode in the target area.

In yet another embodiment, the operation on the target information includes at least one of: a dragging operation of dragging the target information from the display interface of the first application to a preset area; a pressing operation on the target information; or a clicking operation on the target information.

In yet another embodiment, the display module 902 is further configured to display a thumbnail shadow of the target information in a process of dragging the target information from the display interface of the first application to the preset area, in response to the operation on the target information being the dragging operation of dragging the target information from the display interface of the first application to the preset area.

In yet another embodiment, the display module 902 is specifically configured to: create a masking area when the thumbnail shadow moves into the preset area; and respond to the operation on the target information, in case that a termination operation of the dragging operation is detected in the masking area.

In yet another embodiment, the target information includes at least one of a network link or a file.

Regarding the interface display apparatus in the above embodiments, specific ways in which various modules perform operations have been described in detail in embodiments of the interface display method, and will not be described in detail here.

Fig. 12 is a block diagram of an interface display apparatus 1000 according to an exemplary embodiment. For example, the apparatus 1000 may be a mobile phone, a computer, a digital broadcasting terminal, a messaging device, a gaming console, a tablet device, a medical device, a fitness device, a personal digital assistant and the like.

Referring to Fig. 12, the apparatus 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 generally controls overall operations of the apparatus 1000, such as operations associated with display, telephone call, data communication, camera operation and recording operation. The processing component 1002 may include one or more processors 1020 to execute instructions to complete all or part of the steps of the interface display method described above. In addition, the processing component 1002 may include one or more modules to facilitate the interaction between the processing component 1002 and other components. For example, the processing component 1002 may include a multimedia module to facilitate interaction between the multimedia component 1008 and the processing component 1002.

The memory 1004 is configured to store various types of data to support operations at the apparatus 1000. Examples of such data include instructions for any application or method operating on the apparatus 1000, contact data, phone book data, messages, pictures, videos, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the apparatus 1000. The power component 1006 may include a power management system, one or more power sources, and any other components associated with the generation, management, and distribution of power in the apparatus 1000.

The multimedia component 1008 includes a screen that provides an output interface between the apparatus 1000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1008 includes a front camera and/or a rear camera. The front camera and the rear camera may receive an external multimedia datum while the apparatus 1000 is in an operation mode, such as a photographing mode or a video mode. Each of the front camera and the rear camera may be a fixed optical lens system or have focus and optical zoom capability.

The audio component 1010 is configured to output and/or input audio signals. For example, the audio component 1010 includes a microphone (MIC) configured to receive an external audio signal when the apparatus 1000 is in an operation mode, such as a call mode, a recording mode, and a voice recognition mode. The received audio signal may be further stored in the memory 1004 or transmitted via the communication component 1016. In some embodiments, the audio component 1010 further includes a speaker to output audio signals.

The I/O interface 1012 provides an interface between the processing component 1002 and peripheral interface modules, such as a security keyboard, a click wheel, buttons, and the like. The buttons may include, but are not limited to, a home button, a volume button, a starting button, and a locking button.

The sensor component 1014 includes one or more sensors to provide status assessments of various aspects of the apparatus 1000. For instance, the sensor component 1014 may detect an open/closed status of the apparatus 1000, relative positioning of components, e.g., the display and the security keypad, of the apparatus 1000, a change in position of the apparatus 1000 or a component of the apparatus 1000, a presence or absence of user contact with the apparatus 1000, an orientation or an acceleration/deceleration of the apparatus 1000, and a change in temperature of the apparatus 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include an accelerometer sensor, a gyroscope sensor, a magnetic sensor, a pressure sensor, or a temperature sensor.

The communication component 1016 is configured to facilitate wired or wireless communication between the apparatus 1000 and other devices. The apparatus 1000 can access a wireless network based on a communication standard, such as Wi-Fi, 2G, or 3G, or a combination thereof. In an exemplary embodiment, the communication component 1016 receives a broadcast signal or broadcast associated information from an external broadcast management system via a broadcast channel. In an embodiment, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In some embodiments, the apparatus 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In an exemplary embodiment, there is also provided a non-transitory computer-readable storage medium including instructions, such as the memory 1004 including instructions, and instructions are executable by the processor 1020 of the apparatus 1000 to perform the above methods. For example, the non-transitory computer-readable storage medium may be a read-only memory (ROM), a random access memory (RAM), a CD-ROM, a magnetic tape, a floppy disk, an optical data storage device, etc.

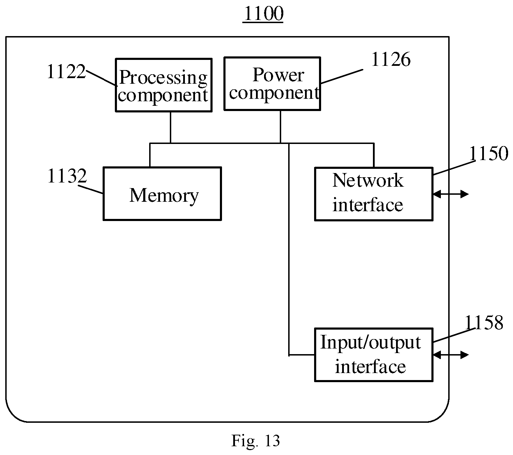

Fig. 13 is a block diagram of an apparatus 1100 for an interface display method according to an exemplary embodiment. For example, the apparatus 1100 may be provided as a server. Referring to Fig. 13, the apparatus 1100 includes a processing component 1122 that further includes one or more processors, and memory resources represented by a memory 1132 for storing instructions (such as application programs) executable by the processing component 1122. The application program stored in the memory 1132 may include one or more modules each corresponding to a set of instructions. In addition, the processing component 1122 is configured to execute instructions to perform the interface display method described above.

The apparatus 1100 may also include a power component 1126 configured to perform power management of the apparatus 1100, a wired or wireless network interface 1150 configured to connect the apparatus 1100 to a network, and an input/output (I/O) interface 1158. The apparatus 1100 can operate an operating system stored in the memory 1132, such as Windows ServerTM, Mac OS XTM, UnixTM, LinuxTM, FreeBSDTM or the like.

Embodiments of the present invention also provide a computer program product, which can be directly loaded into a memory and contains software codes, and can realize the interface display method in the above embodiments after being loaded and executed by a computer.

It may be further understood that "a plurality of" in the present invention indicates two or more, and other quantifiers are similar thereto. The term "and/or" describes an association relationship for describing associated objects, indicating that three relationships may exist. For example, A and/or B may represent the following three cases: only A exists; both A and B exist; and only B exists. The character "/" generally indicates that the associated objects before and after are in an "or" relationship. The singular forms "a/an", "said", and "the" are also intended to include plural forms, unless otherwise clearly specified in the context.

It may be further understood that the terms such as "first" and "second" are used to describe various information, but the information should not be limited to these terms. These terms are only used to distinguish the same type of information from each other, and do not indicate a specific order or degree of importance. In fact, expressions such as "first" and "second" may be used interchangeably. For example, without departing from the scope of the present invention, the first information may also be referred to as second information, and similarly, the second information may also be referred to as first information.

It may be further understood that, although the operations are described in a specific order in the drawings in the embodiments of the present invention, it should not be understood that the operations are required to be performed in the shown specific order or in a serial order, or all the shown operations are required to be performed to get a desired result. In specific circumstances, multitasking and parallel processing may be advantageous.

Other embodiments of the invention will be apparent to those skilled in the art from consideration of the specification and practice of the invention disclosed here. This application is intended to cover any variations, uses, or adaptations of the present invention following the general principles thereof and including such departures from the present invention as come within known or customary practice in the art.

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

## Claims

1. An interface display method, applied to a terminal, a first application running on the terminal, wherein the interface display method comprises:
receiving an operation on target information in case that the target information is displayed on a display interface of the first application; and
displaying a target interface corresponding to the target information on a target display interface in response to the operation, wherein the target display interface is different from the display interface of the first application and is displayed simultaneously with the display interface of the first application.

2. The interface display method according to claim 1, wherein displaying the target interface corresponding to the target information on the target display interface in response to the operation comprises:
triggering the terminal to enter a split screen mode or a small window mode in response to the operation; and
displaying the target display interface in the split screen mode or the small window mode and displaying the target interface corresponding to the target information on the target display interface.

3. The interface display method according to claim 2, wherein displaying the target display interface in the split screen mode or the small window mode and displaying the target interface corresponding to the target information on the target display interface comprises:
when an application corresponding to the target information is a second application and the second application corresponding to the target information is installed on the terminal, and the second application supports running in the split screen mode or the small window mode, controlling the second application to run in the split screen mode or the small window mode; and
taking a display interface of the second application running in the split screen mode or the small window mode as the target display interface, and displaying the target interface corresponding to the target information on the target display interface.

4. The interface display method according to claim 1, wherein displaying the target interface corresponding to the target information on the target display interface in response to the operation comprises:
in response to the operation, when determining that an application corresponding to the target information is a second application, controlling running of the second application in a target area according to the target information and taking the display interface of the second application as the target display interface; and
displaying the target interface corresponding to the target information in the target display interface.

5. The interface display method according to claim 4, wherein controlling running of the second application in the target area according to the target information comprises:
determining that the second application corresponding to the target information is installed on the terminal; and
controlling the second application to run in a split screen mode or a small window mode in the target area.

6. The interface display method according to any one of claims 1-5, wherein the operation comprises at least one of:
a dragging operation of dragging the target information from the display interface of the first application to a preset area;
a pressing operation on the target information; or
a clicking operation on the target information.

7. The interface display method according to claim 6, further comprising:
displaying a thumbnail shadow of the target information in a process of dragging the target information from the display interface of the first application to the preset area, in response to the operation on the target information being the dragging operation of dragging the target information from the display interface of the first application to the preset area.

8. The interface display method according to claim 7, wherein the response to the operation comprises:
creating a masking area when the thumbnail shadow moves into the preset area; and
responding to the operation on the target information, in case that a termination operation of the dragging operation is detected in the masking area.

9. The interface display method according to claim 1, wherein the target information comprises at least one of a network link or a file.

10. An interface display apparatus, applied to a terminal, a first application running on the terminal, wherein the interface display apparatus comprises:
a receiving module, configured to receive an operation on target information in case that the target information is displayed on a display interface of the first application; and
a display module, configured to display a target interface corresponding to the target information on a target display interface in response to the operation, wherein the target display interface is different from the display interface of the first application and is displayed simultaneously with the display interface of the first application.

11. The interface display apparatus according to claim 10, wherein the display module is configured to:
trigger the terminal to enter a split screen mode or a small window mode in response to the operation; and
display the target display interface in the split screen mode or the small window mode and display the target interface corresponding to the target information on the target display interface.

12. The interface display apparatus according to claim 11, wherein the display apparatus is configured to:
when an application corresponding to the target information is a second application and the second application corresponding to the target information is installed on the terminal, and the second application supports running in the split screen mode or the small window mode, control the second application to run in the split screen mode or the small window mode; and
take a display interface of the second application running in the split screen mode or the small window mode as the target display interface, and display the target interface corresponding to the target information on the target display interface.

13. The interface display apparatus according to claim 10, wherein the display module is further configured to:
in response to the operation, when an application corresponding to the target information is determined as a second application, control running of the second application in a target area according to the target information and take the display interface of the second application as the target display interface; and
display the target interface corresponding to the target information in the target display interface.

14. The interface display apparatus according to claim 13, wherein the display module is further configured to:
determine that the second application corresponding to the target information is installed on the terminal; and
control the second application to run in a split screen mode or a small window mode in the target area.

15. An interface display apparatus, comprising:
a processor; and
a memory storing instructions executable by the processor;
wherein the processor is configured to perform the interface display method according to any one of claims 1-9.

16. A non-transitory computer-readable storage medium, wherein when executed by a processor, instructions in the storage medium perform the interface display method according to any one of claims 1-9.
